# EUROPEAN PATENT SPECIFICATION

(11) **EP 1 051 900 B1**
(45) Date of publication and mention of the grant of the patent: **03.12.2003**
(21) Application number: 00110136.9
(22) Date of filing: 11.05.2000
(51) Int. Cl.: A01D 46/24

(54) **Harvesting tool, particulary for gathering olives or similar agricultural products**
Erntegerät insbesondere zum Sammeln von Oliven oder dergleichen landwirtschaftlichen Produkte
Outil moissonneur en particulier pour le ramassage d'olives ou produits agricoles similaires

(30) Priority: 13.05.1999 IT PD990103
(43) Date of publication of application: 15.11.2000
(73) Proprietor: ZANON S.R.L., 35011 Campodarsego (Padova) (IT)
(72) Inventor: Fabris, Renato, 35010 Limena, (Prov. of Padova) (IT); Zanon, Franco, 35011 Campodarsego, (Prov. of Padova) (IT)
(74) Representative: Modiano, Guido, Dr.-Ing.

(56) References cited:
- CH-A- 639 530
- DE-C- 62 874
- FR-A- 2 327 719
- US-A- 2 796 721
- US-A- 3 623 306
- US-A- 5 099 637
- US-A- 5 437 146

## Description

The present invention relates to a harvesting tool which is particularly but not exclusively useful for knocking down or gathering olives or similar agricultural products.

US-A-5437146 discloses an olive stripping rake having a combination of features as set forth in the precharacterizing portion of the appended claim 1.

It is known that the gathering of many agricultural products, typically olives, uses tools which, despite the variety of their embodiments, all comprise two mutually opposite oscillating sectors which are connected to actuation means, to each of which a corresponding rake-like plurality of rods is fixed.

The plurality of rods, which open and close continuously, knock down and also grip the olives or similar agricultural products, gathering them.

These tools, despite having been in use for a long time, are not free from drawbacks.

In particular, their basic structure, owing to the fact that the rods of one series move on planes which coincide with the corresponding planes of the other series, does not allow an adequate grip of the olives, which can sometimes be damaged.

Moreover, the tools are not easy to handle and require operators to perform significant physical efforts owing to the fact that they are fixed at the top of actuation rods onto which actions and reactions of the devices are discharged.

The aim of the present invention is to provide a harvesting tool which solves the drawbacks noted above in similar tools and in particular is suitable to provide a correct grip of the agricultural product which is as similar as possible to the grip of human fingers.

In relation to this aim, an important object of the present invention is to provide a harvesting tool whose masses are balanced with respect to the point of application of the actuation rod and which can be used without excessive physical effort on the part of the operator.

Another object of the present invention is to provide a harvesting tool which is highly flexible in terms of type of agricultural product to be gathered, is safe for the operator and can be adapted to the most disparate handling means.

Another object of the present invention is to provide a harvesting tool in which the actuators are fully protected against any stress apart from the handling stress.

Another object of the present invention is to provide a harvesting tool which can be manufactured with known technologies and at competitive costs with respect to tools having a similar functionality.

In accordance with the invention, there is provided a harvesting tool particularly for gathering olives or similar agricultural products as defined in the appended claims.

Further characteristics and advantages of the present invention will become better apparent from the following detailed description of an embodiment thereof, illustrated only by way of non-limitative example in the accompanying drawings, wherein:
Figure 1 is a general, partially sectional view of a tool according to the invention;
Figure 2 is a partially sectional top view of the tool, taken at right angles to the view plane of Figure 1;
Figure 3 is a partially sectional top view of the tool;
Figure 4 is a sectional view of the articulation between the tool and its actuation pole;
Figure 5 is a schematic view showing the gathering operation as applied to the olives.

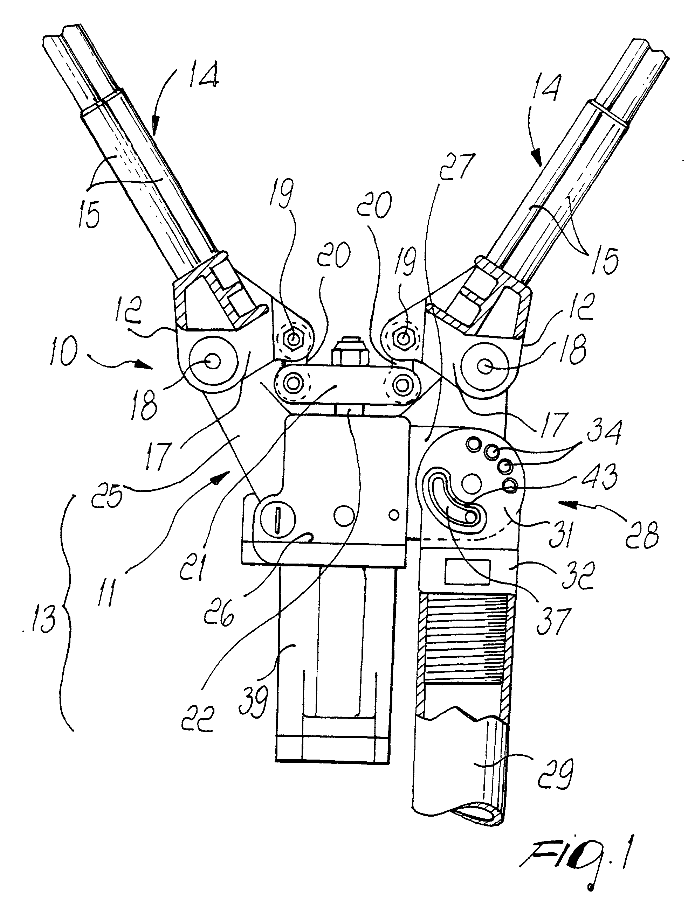

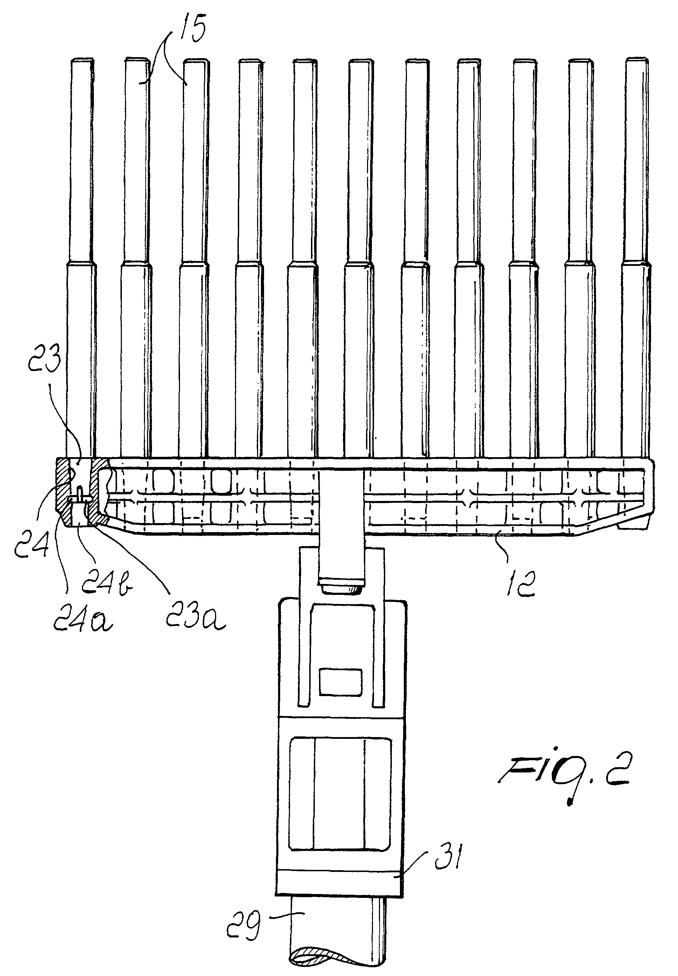

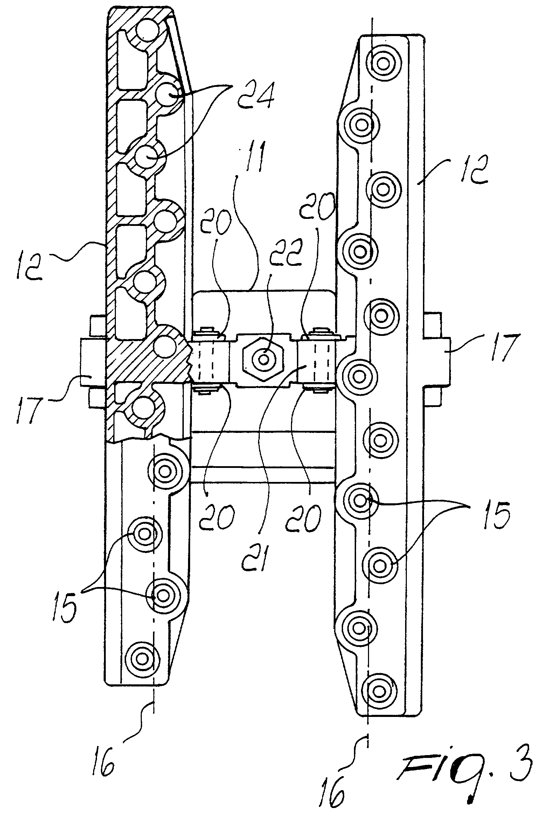

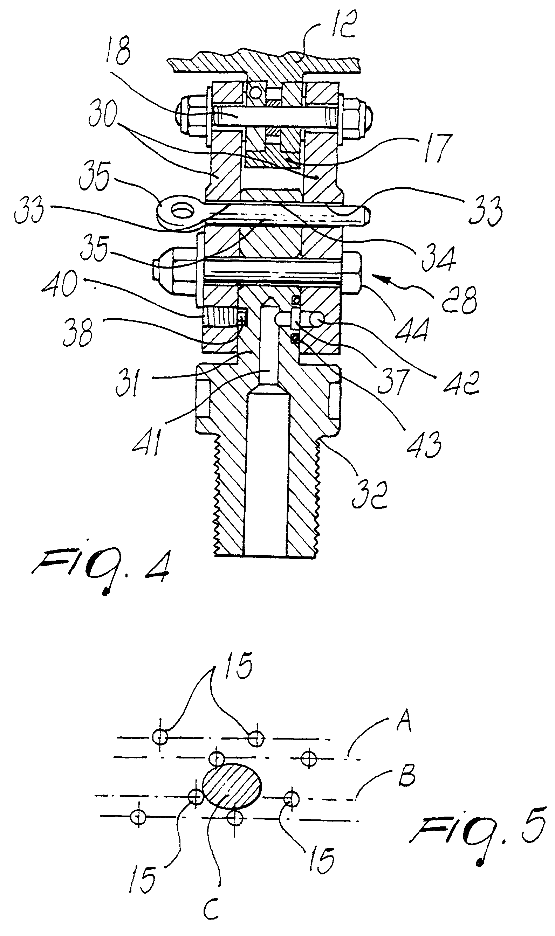

With particular reference to Figures 1 to 5, a tool particularly for gathering olives or similar agricultural products, according to the invention, is generally designated by the reference numeral 10.

In particular, the tool 10 comprises two mutually opposite oscillating sectors 12 which are articulated to a supporting body 11 and are connected to actuation means, generally designated by the reference numeral 13, to each of which a corresponding rake-like series of mutually parallel rods 14 is fixed.

In each series 14, the rods 15 are arranged alternately on either side of an imaginary centerline 16, and the rods 15 of one series are staggered with respect to the rods 15 of the opposite series, so as to provide with them, during closure, a grip which is fully similar to the grip of three fingers of the human hand.

The arrangement of the rods 15 alternately on either side of the centerline 16 determines a series of points which are staggered forward in pairs with respect to a corresponding number of points which are staggered backward in pairs, forming triangles whose forward-staggered points help to direct the olives toward the backward-staggered ones as a second consecutive reaction for separation.

The combined action of these forces is effective both during closure, with the mutually opposite series, and during opening.

With particular reference to the above Figure 5, the rods 15 arranged alternately on two mutually opposite and staggered lines A and B generate, by moving, lines of force upon contact with the olives C which act respectively and sequentially from the first to the second inner/outer contact rod and from the third opposite one, or also in the reverse opening action, with forces which are combined between the first and second respectively outer/inner rods.

Each one of the sectors 12 lies transversely to the direction of motion and is provided, in a median region, with an arm 17 whose fulcrum to the body 11 lies in the portion 18; said arm has a fulcrum 19 for pivoting to a pair of linkages 20 for connection to a bracket 21 which is rigidly coupled to a stem 22 which belongs to actuation means 13 for movement.

Furthermore, each one of the sectors 12 is connected and shaped so as to oscillate symmetrically with respect to the center of its stroke, so as to balance the forces both during closure and during opening.

The rods 15 can be conveniently hollow, grooved and/or provided with external raised portions, and in this embodiment each rod is connected to the respective sector 12 by way of a conical shank 23 which is inserted in a corresponding complementarily shaped seat 24 formed in said sector 12.

Studs 23a of the shank couple in hollows 24a of the seat 24 and are retained with a snap action.

The seat 24 can be accessed, in order to expel the shank 23, through a through hole 24b which is present on the opposite side with respect to the side where the shank 23 is inserted.

The rods 15 are separate from the sectors 12 in order to allow first of all replacement and also to allow possible fitting in a number which differs from the number of seats provided, according to the product to be gathered.

The rods 15 can furthermore be provided in series having different lengths according to the product to be gathered, but the rods of each series all have the same length.

In particular, the supporting body 11 comprises three sections, a first one 25 for supporting said sectors 12, a second one 26 for coupling to the actuation means 13, and a third one 27 for connection, by means of an articulation 28, to an actuation pole 29.

In particular, such a configuration, in addition to producing a better overall balance of the masses, allows to protect the actuation means 13 from stresses other than those directly linked to their movement action.

The articulation 28 is such as to produce a possible angular positioning stroke of 90 sexagesimal degrees.

More specifically, the articulation 28 comprises a first portion 30, which is rigidly coupled to the third section 27 of the body 11, and a second portion 31, which is rigidly coupled to the element 32 for connection to the pole 29.

In the second portion 31, the articulation 28 has a semicircular slot 38 for limiting the movement arc by means of a grub screw 40 which is screwed into the first portion 30.

The portions 30 and 31 of the articulation 28 are provided with through holes 33 and 34 in which it is possible to insert a pin 35 for retention at a preset angle of inclination.

In this case, the holes 34 are four, are distributed along a circular arc and are spaced by arcs which cover 30 sexagesimal degrees.

The articulation 28 can also be adjusted on any position in the arc of 90° by locking by virtue of the coaxial screw 44.

In the region of contact between the portions 30 and 31 of the articulation 28 there is a semicircular recess 37 for connection between portions 41 and 42 of an internal passage for feeding compressed air, and an elastomeric ring 43 is provided for sealing.

In this case, the actuation means 13 are constituted by a pneumatic piston 39 whose stem 22, as mentioned, is fixed to said bracket 21 by means of a linkage.

In practice it has been found that the present invention has achieved the intended aim and objects.

In particular, it should be noted that the structure of the tool according to the invention causes, during closure, the rods to grip the olive or similar agricultural product in a manner which is substantially similar to the grip of three human fingers.

It should also be noted that as a whole the structure of the tool according to the invention is highly balanced in terms of masses, allowing the operator to use it and move it with particular ease.

It is also noted that the actuation pole is applied not directly to the actuator but to the supporting body.

It should also be observed that the tool is simple to use and highly flexible in terms of operation.

It should also be noted that although the tool is constructively rather simple it is sturdy and suitable even for long and uninterrupted working cycles, maintaining characteristics of adequate functionality to a considerable extent.

The present invention is susceptible of numerous modifications and variations, all of which are within the scope of the inventive concept.

The technical details may be replaced with other technically equivalent elements.

The materials and the dimensions may be any according to requirements.

The disclosures in Italian Patent Application No. PD99A000103 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A harvesting tool, particularly for gathering olives or similar agricultural products, comprising two mutually opposite oscillating sectors (12), which are articulated to a supporting body (11) and are connected to actuation means (13), a corresponding series (14) of rods (15) arranged in a rake-like configuration being fixed to each one of said actuation means (13), the respective rods (15) of each one of said series (14) being arranged in an intermediate and staggered position with respect to the rods (15) of the opposite series (14), **characterizing in that** in each series (14) the rods (15) are arranged alternately on either side of an imaginary line (16), so as to produce together, during closure, a grip which is similar to that of three fingers of the human hand.

2. The tool according to claim 1, **characterized in that** each one of said sectors (12) lies transversely to the direction of motion and has, in a median region, a first arm (17) whose articulation fulcrum (19) is pivoted to said body (11) and a second arm (17) which is articulated to said actuation means (13), each said sector (12) being connected to said actuation means by way of a linkage (20) and being shaped so as to oscillate symmetrically with respect to the central point of its stroke.

3. The tool according to one or more of the preceding claims, **characterized in that** the surface of said rods (15) comprises raised portions and/or grooves in order to improve grip.

4. The tool according to one or more of the preceding claims, **characterized in that** each one of said rods (15) is connected to the respective sector (12) by way of a conical shank (23) which is inserted in a corresponding seat (24) provided with snap retention.

5. The tool according to claim 4, **characterized in that** each one of said seats (24) is provided with an access hole (24b) which lies opposite to the side of the seat (24) for the insertion of the corresponding rod (15), said hole (24b) being usable in order to optionally expel a rod (15).

6. The tool according to one or more of the preceding claims, **characterized in that** said supporting body (11) comprises three sections, a first one (25) for the articulation of said sectors (12), a second one (26) for coupling to said actuation means (13), and a third one (27) for connection to an actuation pole (29) by means of an articulation (28).

7. The tool according to one or more of the preceding claims, **characterized in that** said articulation (28) is shaped so as to determine a possible angular adjustment stroke of 90 sexagesimal degrees between said supporting body (11) and said actuation pole (29).

8. The tool according to one or more of the preceding claims, **characterized in that** in the region of contact between the mutually articulated portions (30,31) that constitute said articulation (28) there is a semicircular recess (37) for connection between portions (41,42) of an internal passage for feeding compressed air, and **in that** an elastomeric ring (42) is provided for sealing.

9. The tool according to one or more of the preceding claims, **characterized in that** said articulation (28) has, in one (31) of the portions (30,31) that form it, a semicircular slot (38) for limiting the movement arc, the end of a grub screw (40) screwed into the other portion (30) acting in said slot (38).

10. The tool according to one or more of the preceding claims, **characterized in that** said first (30) and second (31) portions of said articulation (28) are provided with through holes (33,34) in which a retention pin (35) can be inserted.

11. The tool according to one or more of the preceding claims, **characterized in that** said through holes (33,34) in the articulation (28) are formed along an imaginary circular arc, and **in that** their angular center distances are all identical and are equal to 30 sexagesimal degrees.

12. The tool according to one or more of the preceding claims, **characterized in that** said articulation (28) can be adjusted on four positions at 30° to each other by inserting said retention pin (35) in the chosen position, or can be adjusted to any position in the arc of 90° by locking by way of a coaxial screw (44).

13. The tool according to one or more of the preceding claims, **characterized in that** said actuation means (13) comprise a pneumatic piston (39) whose stem (22) supports a bracket (21) which is fixed thereto and is connected to each one of said sectors (12) by way of corresponding linkages.

## Patentansprüche

1. Erntegerät, insbesondere zum Sammeln von Oliven oder ähnlichen landwirtschaftlichen Produkten, mit zwei zueinander entgegengesetzt schwingenden Abschnitten (12), welche gelenkartig an einem tragenden Körper (11) gelagert und mit Betätigungsmitteln (13) verbunden sind, eine dazugehörige Reihe (14) aus Stangen (15), angeordnet in einer hakenartigen Anordnung, ist an jedem einzelnen der Betätigungsmittel (13) fixiert, wobei die jeweiligen Stangen (15) einer jeden Reihe (14) in einer Zwischenstellung und versetzt in Bezug auf die Stangen (15) der gegenüberliegenden Reihe (14) angeordnet sind, **dadurch gekennzeichnet, dass** in jeder Reihe (14) die Stangen (15) abwechselnd auf beiden Seiten einer gedachten Linie (16) angeordnet sind, so dass sie zusammen, während des Schließens, einen Griff erzeugen, der ähnlich dem aus drei Fingern einer menschlichen Hand ist.

2. Gerät nach Anspruch 1, **dadurch gekennzeichnet, dass** jeder einzelne der Abschnitte (12) quer zu der Bewegungsrichtung liegt und, in einem mittleren Bereich, einen ersten Arm (17), dessen Gelenkachse (19) drehbar an dem Körper (11) gelagert ist, und einen zweiten Arm (17) hat, welcher gelenkartig mit dem Betätigungsmittel (13) verbunden ist, wobei jeder der Abschnitte durch ein Gestängesystem (20) mit dem Betriebsmittel verbunden und geformt ist, um symmetrisch in Bezug auf den Mittelpunkt seines Hubes zu schwingen.

3. Gerät nach einem oder mehreren der voranstehenden Ansprüche, **dadurch gekennzeichnet, dass** die Oberfläche der Stangen (15) erhobene Teile und/oder Rillen aufweisen, um den Griff zu verbessern.

4. Gerät nach einem oder mehreren der voranstehenden Ansprüche, **dadurch gekennzeichent, dass** jede der Stangen (15) mit dem jeweiligen Abschnitt (12) durch einen konischen Zapfen (23) verbunden ist, welcher in einem korrespondierenden, mit Schnappsicherung versehenen Sitz (24) eingeführt ist.

5. Gerät nach Anspruch 4, **dadurch gekennzeichnet, dass** jeder einzelne der Sitze (24) mit einer Zugangsöffnung (24b) versehen ist, welche entgegengesetzt zu der Seite des Sitzes (24) zum Einführen der entsprechenden Stange (15) liegt, wobei die Öffnung (24b) verwendbar ist, um wahlweise eine Stange (15) herauszustoßen.

6. Gerät nach einem oder mehreren der voranstehenden Ansprüche, **dadurch gekennzeichnet, dass** der tragende Körper (11) drei Segmente aufweist, ein erstes (25) für die Gelenkverbindung des Abschnittes (12), ein zweites (26) zur Kopplung mit dem Betätigungsmittel (13) und ein drittes (27) zur Verbindung mit einer Antriebsstange (29) mittels eines Gelenks (28).

7. Gerät nach einem oder mehreren der voranstehenden Ansprüche, **dadurch gekennzeichnet, dass** das Gelenk (28) geformt ist, um einen möglichen Schwenkbarkeitsanschlag von 90 sexagesimalen Graden zwischen dem tragenden Körper (11) und der Antriebsstange (29) festzulegen.

8. Gerät nach einem oder mehreren der voranstehenden Ansprüche, **dadurch gekennzeichnet, dass** in der Region des Kontakts zwischen den zueinander gelenkartig gelagerten Teilen (30, 31 ), die das Gelenk (28) bilden, eine halbkreisförmige Vertiefung (37) zur Verbindung zwischen Teilen (41, 42) eines inneren Durchlasses zur Zufuhr von Druckluft ist, in der ein elastischer Ring (42) zur Abdichtung bereitgestellt ist.

9. Gerät nach einem oder mehreren der voranstehenden Ansprüche, **dadurch gekennzeichnet, dass** das Gelenk (28) in einem (31) der Teile (30, 31), die es bilden, eine halbkreisförmige Kerbe (38) zur Begrenzung des Bewegungsbogens hat, wobei das Ende eines Gewindestifts (40), der in den anderen Teil (30) geschraubt ist, in dieser Kerbe (38) angreift.

10. Gerät nach einem oder mehreren der voranstehenden Ansprüche, **dadurch gekennzeichnet, dass** der erste (30) und zweite (31) Teil des Gelenks (28) mit Durchgangslöchern (33, 34) versehen sind, in welchen ein Haltestift (35) eingesteckt werden kann.

11. Gerät nach einem oder mehreren der voranstehenden Ansprüche, **dadurch gekennzeichnet, dass** die Durchgangslöcher (33, 34) in dem Gelenk (28) entlang eines imaginären Kreisbogens gebildet sind und dass ihre winkelbezogenen Mittenabstände alle identisch und gleich 30 sexagesimalen Graden sind.

12. Gerät nach einem oder mehreren der voranstehenden Ansprüche, **dadurch gekennzeichnet, dass** das Gelenk (28) in vier Positionen mit 30° zueinander durch Einstecken des Haltestifts (35) in die gewählte Position festgestellt werden kann oder in jeder Position auf dem Bogen von 90° durch Festklemmen einer koaxialen Schraube (44) festgestellt werden kann.

13. Gerät nach einem oder mehreren der voranstehenden Ansprüche, **dadurch gekennzeichnet, dass** das Betätigungsmittel (13) einen Pressluftkolben (39) enthält, dessen Schaft (22) eine Befestigungsschelle (21) trägt, die daran befestigt ist und mit jedem einzelnen der Abschnitte (12) über korrespondierende Gestänge verbunden ist.

## Revendications

1. Outil moissonneur, en particulier pour le ramassage d'olives ou de produits agricoles similaires, comprenant deux secteurs (12) oscillants, mutuellement opposés, articulés à un corps de support (11) et reliés à des moyens d'actionnement (13), une série (14) correspondante de tiges (15), agencées en configuration analogue à un râteau étant fixées sur chacun desdits moyens d'actionnement (13), les tiges (15) respectives de chacune desdites séries (14) étant agencées en une position intermédiaire et décalées en quinconce par rapport aux tiges (15) des séries (14) opposées, **caractérisé en ce que**, dans chaque série (14), les tiges (15) sont agencées de façon alternée de chaque côté d'une ligne imaginaire (16) de façon à produire ensemble, lors de la fermeture, une prise similaire à celle de trois doigts de la main humaine.

2. Outil selon la revendication 1, **caractérisé en ce que** chacun desdits secteurs (12) est situé transversalement par rapport à la direction de déplacement et comporte, dans une zone médiane, un premier bras (17) dont le point d'articulation (19) est monté à pivotement sur ledit corps (11) et un deuxième bras (17) articulé auxdits moyens d'actionnement (13), chaque secteur (12) précité étant connecté auxdits moyens d'actionnement par un élément de liaison (20) et étant conformé pour osciller symétriquement par rapport au point central de sa course.

3. Outil selon une ou plusieurs des revendications précédentes, **caractérisé en ce que** la surface desdites tiges (15) comprend des parties en relief et/ou des gorges visant à améliorer la prise.

4. Outil selon une ou plusieurs des revendications précédentes, **caractérisé en ce que** chacune desdites tiges (15) est reliée au secteur (12) respectif à l'aide d'une queue (23) conique insérée dans un siège (24) correspondant, muni de moyens de retenue à encliquetage.

5. Outil selon la revendication 4, **caractérisé en ce que** chacun desdits sièges (24) est muni d'un trou d'accès (24b) placé à l'opposé du côté du siège (24) prévu pour l'insertion de la tige (15) correspondante, ledit trou (24b) étant utilisable pour éventuellement expulser une tige (15).

6. Outil selon une ou plusieurs des revendications précédentes, **caractérisé en ce que** ledit corps de support (11) comprend trois sections, une première (25) étant prévue pour l'articulation desdits secteurs (12), une deuxième (26) étant prévue pour le couplage auxdits moyens d'actionnement (13), et une troisième (27) étant prévue pour la connexion à un mât d'actionnement (29) à l'aide d'une articulation (28).

7. Outil selon une ou plusieurs des revendications précédentes, **caractérisé en ce que** ladite articulation (28) est conformée pour déterminer une course d'ajustement angulaire possible, d'une valeur angulaire de 90 degrés sexagésimaux entre ledit corps de support (11) et ledit mât d'actionnement (29).

8. Outil selon une ou plusieurs des revendications précédentes, **caractérisé en ce que**, dans la région de contact entre les parties (30, 31) mutuellement articulées, formant ladite articulation (28), est prévue une cavité (37) semi-circulaire, devant assurer la liaison entre des parties (41, 42) d'un passage intérieur afin d'assurer l'alimentation en air comprimé, et **en ce qu'**une bague (42) en élastomère est prévue pour assurer l'étanchéité.

9. Outil selon une ou plusieurs des revendications précédentes, **caractérisé en ce que** ladite articulation (28) comprend, dans l'une (31) des parties (30, 31) la formant, une fente (38) à tracé semi-circulaire, devant limiter l'arc de déplacement, l'extrémité d'une vis sans tête (40) étant vissée dans l'autre partie (30), agissant dans ladite fente (38).

10. Outil selon une ou plusieurs des revendications précédentes, **caractérisé en ce que** lesdites première (30) et deuxième (31) parties de ladite articulation (28) sont munies de trous traversants (33, 34), dans lesquels peut être insérée une tige de retenue (35).

11. Outil selon une ou plusieurs des revendications précédentes, **caractérisé en ce que** lesdits trous traversants (33, 34) de l'articulation (28) sont formés selon un arc circulaire imaginaire, et **en ce que** leurs distances angulaires par rapport au centre sont toutes identiques et sont égales à 30 degrés sexagésimaux.

12. Outil selon une ou plusieurs des revendications précédentes, **caractérisé en ce que** ladite articulation (28) peut être ajustée en quatre positions à 30 degrés l'une de l'autre, par insertion de ladite tige de retenue (35) à la position choisie, ou peut être ajustée en une position quelconque de l'arc de 90 degrés, par verrouillage à l'aide d'une vis (44) coaxial.

13. Outil selon une ou plusieurs des revendications précédentes, **caractérisé en ce que** lesdits moyens d'actionnement (13) comprennent un piston pneumatique (39), dont la tige (22) supporte une console (21) fixée à celle-ci et reliée à chacun desdits secteurs (12), par des mécanismes correspondants.
